# NEUE EUROPÄISCHE PATENTSCHRIFT

(11) **EP 2 226 501 B2**
(45) Veröffentlichungstag und Bekanntmachung des Hinweises auf die Entscheidung über den Einspruch: **09.12.2020**
(45) Hinweis auf die Patenterteilung: 10.08.2016
(21) Anmeldenummer: 10005681.1
(22) Anmeldetag: 21.06.2006
(51) Int. Cl.: F03D 17/00, G05B 23/02

(54) **Verfahren und Anordnung zum Vermessen einer Windenergieanlage**
Method and arrangement for measuring of a wind energy plant
Procédé et arrangement permettant de mesurer une éolienne

(30) Priorität: 21.06.2005 DE 102005028686
(43) Veröffentlichungstag der Anmeldung: 08.09.2010
(62) Teilanmeldung aus: 06012772.7
(73) Patentinhaber: Senvion GmbH, 22297 Hamburg (DE)
(72) Erfinder: Weitkamp, Roland, 49191 Belm (DE); Altemark, Jens, 24768 Rendsburg (DE)
(74) Vertreter: Glawe, Delfs, Moll

(56) Entgegenhaltungen:
- EP-A1- 0 644 331
- EP-A1- 0 825 344
- EP-A1- 1 288 494
- WO-A1-01/66940
- WO-A1-03/040554
- WO-A1-2006/056404
- DE-A1- 10 011 393
- DE-A1- 10 033 183
- DE-A1- 10 117 114
- DE-A1- 10 127 451
- DE-A1- 10 220 412
- DE-A1- 10 323 785
- DE-A1- 19 731 918
- DE-A1- 19 934 415
- DE-A1-102004 056 254
- DE-C1- 4 220 255
- DE-C1- 19 628 073
- US-A- 4 088 352
- Rainer Bareiss: In: "Last-, Stroemungsfeld- und Schallberechnungen an Windkraftanlagen mit einem Panelverfahren zur Simulation einer starren, freien oder hybriden Nachlaufschicht", 20. März 1998 (1998-03-20), Universität Stuttgart, Stuttgart, XP008166097, Seiten 47-81, * Chapter 3.3.3 *

## Beschreibung

Die Erfindung betrifft ein Verfahren und eine Anordnung zum Vermessen einer Windenergieanlage. Bei dem Verfahren werden zugeordnete Messsätze für eine Mehrzahl von Parametersätzen der Windenergieanlage aufgenommen, wobei die Messsätze zeitlich aufeinanderfolgende Messvektoren umfassen. Die Anordnung umfasst eine Messeinrichtung zum Aufnehmen von zeitlich aufeinanderfolgenden Messvektoren, einen Parameterspeicher zum Speichern von Parametersätzen, ein Steuermodul zum Einstellen der Windenergieanlage gemäß den Parametersätzen sowie einen Datenspeicher, der dazu ausgelegt, die Messvektoren in Messsätzen zu speichern und die Messsätze den Parametersätzen zuzuordnen.

Windenergieanlagen, in denen über einen Rotor und einen Generator elektrische Energie erzeugt wird, sind weit verbreitet. Der Betriebszustand einer Windenergieanlage wird durch eine Vielzahl von Parametern bestimmt. Nur beispielhaft seien als Parameter hier aufgezählt der Anstellwinkel der Rotorblätter, die Drehzahlkennlinie des Generators und Reglereinstellungen.

Sowohl um einen optimalen Betrieb sicherzustellen als auch, um nachzuweisen, dass die Windenergieanlage den Vorschriften gemäß betrieben wird, sind Informationen über die Systemeigenschaften der Windenergieanlage erforderlich. Dazu werden die Systemeigenschaften bei verschiedenen Parametereinstellungen und bei verschiedenen Windverhältnissen vermessen, siehe z.B. DE 19934415. Als Systemeigenschaften gemessen werden können beispielsweise die abgegebene Leistung, das Geräuschverhalten oder das Schwingungsverhalten.

Die Systemeigenschaften ändern sich zwischen schwachen und starken Winden, zwischen böigen und gleichmäßigen Winden usw. Zu einer umfassenden Vermessung der Systemeigenschaften gehören deswegen Messungen bei vielen unterschiedlichen Windverhältnissen. Es besteht das Problem, dass die Windverhältnisse nicht beeinflusst werden können und dass vor allem die gewünschten Windverhältnisse sich nicht in einer schnellen Abfolge einstellen.

Bisher ist es beim Vermessen von Windenergieanlagen üblich, die Parameter der Windenergieanlage auf bestimmte Werte einzustellen und diese Parametereinstellungen so lange beizubehalten, bis die Messung für diesen Parametersatz vollendet ist, bis also alle unterschiedlichen Windverhältnisse sich nacheinander eingestellt haben. Danach wird die Windenergieanlage auf einen anderen Parametersatz eingestellt, und die Systemeigenschaften dieses Parametersatzes werden vollständig vermessen. Bereits für einen einzelnen Parametersatz ist das Vermessen wegen der Abhängigkeit von den Windverhältnissen ein langwieriger Vorgang. Extrem zeitaufwändig wird das Vermessen einer Windenergieanlage, wenn mehrere Parametersätze nacheinander vermessen werden sollen.

Nachteilig beim bisherigen Verfahren ist es zudem, dass die bei unterschiedlichen Parametersätzen aufgenommenen Messungen nicht ohne weiteres verglichen werden können. Zwar kann man mit der Messung des nächsten Parametersatzes warten, bis einzelne Parameter des Windes, etwa Windstärke und Windrichtung, sich wieder einstellen. Die Messergebnisse sind aber abhängig von weiteren Parametern des Windes, wie beispielsweise der Luftdichte, der Turbulenz und des Windgradienten. Daraus resultierende Schwierigkeiten beim Vergleich von Messergebnissen.

Der Erfindung liegt die Aufgabe zugrunde, ein Verfahren und eine Vorrichtung vorzustellen, die den Zeitaufwand für das Vermessen der Windenergieanlage bei gleicher oder verbesserter Messqualität reduzieren.

Die Aufgabe wird gelöst durch die Merkmale der unabhängigen Ansprüche. Bei einem Verfahren gemäß dem Oberbegriff des Anspruchs 1 wird in Zyklen zwischen den Parametersätzen gewechselt und für jeden Parametersatz in mehr als einem Zyklus Messvektoren aufgenommen. Bei einer Anordnung gemäß dem Oberbegriff des Anspruchs 16 ist das Steuermodul dazu ausgelegt, einen Parametersatz aus den Parametersätzen in Zyklen auszuwählen und nach jeder Auswahl den dem ausgewählten Parametersatz zugeordneten Messsatz im Datenspeicher zu aktivieren. Vorteilhafte Ausführungsformen finden sich jeweils in den Unteransprüchen.

Zunächst werden einige Begriffe definiert.

Die Parameter einer Windenergieanlage sind die den Betriebszustand kennzeichnenden Größen. Insbesondere umfassen die Parameter alle Größen, die voreinstellbar sind oder automatisch eingestellt werden können. Dies sind beispielsweise Blattwinkel, Drehmoment, Drehzahl, Reglereinstellungen, Verstärkungsfaktoren sowie Einstellungen von aktiven oder passiven Maßnahmen zur Schwingungsdämpfung. In einem Parametersatz haben alle Parameter einen festen Wert oder stehen in einem festen funktionalen Zusammenhang (Kennlinie).

Ein Messvektor enthält die in einem einzelnen Messintervall aufgenommenen Daten über die Windenergieanlage. Während die Daten für einen Messvektor aufgenommen werden, bleibt der Parametersatz der Windenergieanlage konstant. Ein Messvektor kann eine Mehrzahl von in dem Zeitraum aufgenommenen Daten umfassen. Von einem Messvektor wird jedoch auch dann gesprochen, wenn er nur einen einzelnen Wert enthält. Ein solcher einzelner Wert kann etwa ein Durchschnittswert über ein Messintervall sein.

Ein Messsatz umfasst eine Mehrzahl von Messvektoren. Die Messvektoren eines Messsatzes zeichnen sich dadurch aus, dass sie Daten enthalten, die mit demselben Parametersatz aufgenommen wurden. Jeder Messsatz ist also einem bestimmten Parametersatz zugeordnet. Da die Messvektoren bei unterschiedlichen Windverhältnissen aufgenommen werden, folgen sie zeitlich aufeinander.

Vom Aktivieren eines Messsatzes in einem Datenspeicher wird gesprochen, wenn ein einzelner Messsatz aus einer Mehrzahl von Messsätzen ausgewählt und die nächsten zu speichernden Messdaten dem ausgewählten Messsatz zugeordnet werden.

Im Unterschied zur bisher üblichen Vorgehensweise werden nicht mehr alle Messvektoren eines Messsatzes in direkter zeitlicher Abfolge aufgenommen, sondern es wird in Zyklen zwischen den Parametersätzen gewechselt. Von einem Wechsel in Zyklen wird schon dann gesprochen, wenn die Parametersätze während des Vermessens mindestens zweimal eingestellt werden. Es ist also nicht erforderlich, dass jeder Zyklus jeden Parametersatz umfasst, ebenfalls nicht erforderlich ist es, dass die Parametersätze innerhalb der Zyklen in gleichbleibender Reihenfolge aufeinander folgen.

Indem in Zyklen zwischen den Parametersätzen und den zugeordneten Messsätzen gewechselt wird, jeweils bevor alle Messvektoren des betreffenden Messsatzes aufgenommen sind, wird erreicht, dass die verschiedenen Parametersätze quasi-parallel vermessen werden. Von einer vollständigen Parallelität kann deswegen nicht gesprochen werden, weil nie zu einem Zeitpunkt zwei Parametersätzen eingestellt sein können. Es wird jedoch die Bearbeitung eines Parametersatzes und damit Messsatzes unterbrochen, bevor alle Messvektoren des Messsatzes aufgenommen sind, und zu einem nächsten Parameter- und Messsatz gewechselt. Auf diese Weise werden die Parameter- und Messsätze quasi-parallel abgearbeitet.

Gegenüber einer sequentiellen Abarbeitung der Parameter- und Messsätze bietet die erfindungsgemäße quasi-parallele Vermessung eine erheblich Zeitersparnis, weil nicht für jeden Parametersatz erneut gewartet werden muss, bis bestimmte Windverhältnisse sich einstellen. Zudem wird eine bessere Vergleichbarkeit der Messwerte verschiedener Parametersätzen erreicht, weil die Windverhältnisse innerhalb der kurzen Zeit, die ein Wechsel zwischen zwei Parametersätzen in Anspruch nimmt, weitgehend konstant bleiben. Das bedeutet eine erhöhte Qualität der Vergleichbarkeit der Messergebnisse.

Mit dem Verfahren werden mindestens zwei Parametersätze vermessen. Die Zeitersparnis kann aber vergrößert werden, indem mehr als zwei Parametersätze vermessen werden.

Jeder Messvektor umfasst vorzugsweise Daten aus einem Messintervall, dessen Länge zwischen 1 und 15 Minuten, weiter vorzugsweise zwischen 8 und 12 Minuten liegt.

Nach einem Wechsel des Parametersatzes kann die Windenergieanlage in einer Übergangsphase instationären Übergangseffekten unterliegen. Damit die Messung nicht verfälscht wird, wird nach einem Wechsel des Parametersatzes zunächst das Abklingen der instationären Übergangseffekte abgewartet, bevor der nächste Messvektor aufgenommen wird. Ist es bekannt, wie lange das Abklingen dauert, so kann die Länge der Übergangsphase entsprechend der bekannten Dauer fest voreingestellt werden.

Insbesondere kann die fest einzustellende Länge der Übergangsphase von der zu messenden Größe abhängig gemacht werden. So dauert es etwa nach dem Verstellen des Anstellwinkels der Rotorblätter zwischen 20 Sekunden und 1 Minute, bis der Rotor einen stationären Zustand annimmt. Sobald sich der stationäre Zustand eingestellt hat, können Daten etwa über die Leistungsabgabe des Generators aufgenommen werden. Wird mit einer Veränderung von Parametern hingegen Einfluss auf das Schwingungsverhalten der Windenergieanlage genommen, so kann es bis zu 10 Minuten dauern, bis die instationären Übergangseffekte abgeklungen sind. Insbesondere bei Off-shore-Windenergieanlagen, die zusätzlich durch Meereswellen angeregt werden, kann es sehr lange dauern, bis sich ein neuer stationärer Schwingungszustand eingestellt hat. Vor der Aufnahme von Daten über das Schwingungsverhalten wird nach einem Parameterwechsel also eine deutlich längere Übergangsphase abgewartet.

Anstatt mit Übergangsphasen vorbestimmter Länge zu arbeiten, kann es auch vorteilhaft sein, die Dauer der Übergangsphase dynamisch zu bestimmen und nach jedem Parameterwechsel zu messen, ob die Übergangseffekte abgeklungen sind. Erst nach dem Abklingen wird mit der Aufnahme des nächsten Messvektors begonnen.

Insbesondere bei kurzen Übergangsphasen kann nach der Aufnahme eines jeden Messvektors der Parametersatz gewechselt werden. Sind die Übergangsphasen lang, kann es sich anbieten, zunächst eine Mehrzahl von Messvektoren aufzunehmen, bevor der Parametersatz gewechselt wird.

Die Messvektoren enthalten vorteilhafterweise Daten über die Leistungsabgabe, die Netzverträglichkeit, die Geräuschabgabe und/oder das Schwingungsverhalten der Windenergieanlage. Auch Daten über weitere Belastungen und Beanspruchungen können aufgenommen werden. Vorzugsweise umfasst die Anordnung Detektoren für alle diese Größen, insbesondere Detektoren für das Schwingungsverhalten und/oder die Geräuschabgabe der Windenergieanlage.

Weiterhin können die Messvektoren auch Daten über die Windverhältnisse, insbesondere Windrichtung und Windstärke, umfassen. Diese Daten können mit Hilfe eines auf der Windenergieanlage angeordneten Windmessers gewonnen werden. Die mit diesem Windmesser gewonnenen Daten können jedoch ungenau sein, etwa weil der Windmesser in den Abwinden des Rotors liegt. Um diese Ungenauigkeiten zu vermeiden, kann vor oder neben der Windenergieanlage ein mit Windsensoren ausgestatteter Messmast errichtet werden. Dies ist jedoch kostspielig. Vorteilhaft kann es deswegen sein, die Daten über die Windverhältnisse auf einer benachbarten Windenergieanlage aufzunehmen. Dazu kann entweder ein auf der benachbarten Windenergieanlage angeordneter Windmesser verwendet werden, oder es können aus der Leistungsabgabe des Rotors Rückschlüsse auf die Windverhältnisse gezogen werden. Insbesondere kann die benachbarte Windenergieanlage in Windrichtung seitlich benachbart sein, damit die beiden Windenergieanlagen unbeeinflusst von den gegenseitigen Abwinden sind. Diese vorteilhafte Wirkung kann auch erreicht werden, wenn die benachbarte Windenergieanlage in Windrichtung mit ausreichendem Abstand von der zu vermessenden Windenergieanlage angeordnet ist.

Für die Zuordnung einer benachbarten Windenergieanlage als Windmesser kann die Anordnung eine Auswahleinheit umfassen. Diese kann insbesondere dazu ausgebildet sein, eine in Windrichtung seitlich benachbarte Windenergieanlage zuzuordnen.

Der Zweck der Vermessung der Windenergieanlage kann es sein, die Anlage an die vorliegenden Standortbedingungen anzupassen. Anhand der gemessenen Daten und der standortspezifischen Windverteilung können die Parametersätze herausgefunden werden werden, die einen hohen Jahresenergieertrag versprechen. Es ist wünschenswert, zu diesem Zweck über eine Vielzahl von Daten zu verfügen und diese miteinander zu vergleichen. Dies kann erleichtert werden, indem Messmatrizen anstatt der Messvektoren aufgenommen werden. Jeder Messsatz besteht dann aus einer Mehrzahl von Messmatrizen anstatt einer Mehrzahl von Messvektoren. In einer solchen Messmatrix kann beispielsweise die Leistung über der Windgeschwindigkeit und dem Turbulenzwert erfasst werden (sog. Capture-Matrix). Für jeden einzelnen Messvektor innerhalb der Messmatrix müssen mehrere Ausgangsbedingungen in Kombination vorliegen. Da manche dieser Kombinationen seltener sind als andere, kann eine Priorität festgelegt werden, gemäß der die Messmatrix gefüllt wird. Auch unabhängig von der Messmatrix kann die Reihenfolge der Datenaufnahme priorisiert werden. So kann etwa die Standard-Leistungskurve eine höhere Priorität haben als die Geräuschabgabe und die Netzverträglichkeit.

Für eine standortspezifische Anpassung besonders geeignete Parameter sind z.B. die Blattwinkel im Teillastbereich, Drehzahlkennlinien für den schallreduzierten Betrieb, oder auch Umrichterparameter für das Netzverhalten. Letztere können auch in sehr kurzen Messintervallen (deutlich weniger als zwei Minuten) vermessen werden. Weiterhin ist auch die Veränderung von Systemparametern ermöglicht, die mechanische Eigenschaften beschreiben, z.B. die Masse von schwingungsanfälligen Komponenten, welche die Eigenfrequenzen des Systems beeinflussen. Diese Massen können z.B. mit Ballasttanks, welche mit Wasser geflutet werden, beeinflusst werden.

Bei den Messungen zum Zwecke der Ermittlung optimaler Betriebszustände wird Wert darauf gelegt, die Kosten niedrig zu halten. Besonders günstig kann die Anlage gestaltet werden, indem sie mit einem einzelnen Speichermodul ausgestattet wird, das sowohl den Parameterspeicher als auch den Datenspeicher umfasst. Ebenfalls kostengünstig ist es, das Steuermodul innerhalb der Windenergieanlage anzuordnen.

Außer zum Ermitteln optimaler Betriebszustände können die Messungen auch gutachterlich durchgeführt werden. Gutachterliche Messungen werden von unabhängigen Dritten durchgeführt, etwa um festzustellen, ob die Windenergienanlage den Vorschriften gemäß arbeitet. Gutachterliche Messungen unterliegen hohen Ansprüchen an die Neutralität und Manipulationssicherheit. Insbesondere muss eine beabsichtigte oder unbeabsichtigte Beeinflussung der Messergebnisse durch Einstellung günstigerer Parameter ausgeschlossen sein. Zu diesem Zweck kann ein von der Windenergieanlage getrenntes Steuermodul vorgesehen sein, mit Hilfe dessen zwischen den Parametersätzen gewechselt wird. Das Steuermodul kann bei dem Gutachter angeordnet sein und damit jeglicher Einflussnahme des Betreibers der Windenergieanlage entzogen sein. Der Gutachter kann dann in beliebiger Reihenfolge etwa zwischen ertragsstarken und ertragsschwachen Parametersätzen wechseln und so eine Manipulation durch beispielsweise pauschal verzögerte Umstellung sicher ausschließen. In diesem Fall ändert sich die Abfolge der Parametersätze von Zyklus zu Zyklus.

Zwar ist die Manipulationssicherheit groß, wenn das gesamte Steuermodul beim Gutachter angeordnet ist, es steigt jedoch das Risiko einer fehlerhaften Ansteuerung der Windenergieanlage, etwa durch fehlerhafte Datenübermittlung. Für einen sicheren Betrieb der Windenergieanlage ist es entscheidend, dass die verschiedenen Parameter des Parametersatzes in einer bestimmten Beziehung zueinander stehen. Werden einzelne Parameter verändert, ohne die Auswirkungen auf andere Parameter zu berücksichtigen, kann die Windenergieanlage außer Kontrolle geraten. Das Risiko einer fehlerhaften Ansteuerung kann reduziert werden, indem das Steuermodul in zwei getrennte Einheiten aufgespalten wird, nämlich eine Steuereinheit und einen Befehlsgeber. Die Steuereinheit kann zusammen mit dem Parameterspeicher in der Windenergieanlage angeordnet sein. Durch Beschränkung der Steuereinheit auf die im Parameterspeicher gespeicherten Parametersätze ist es ausgeschlossen, dass die Windenergieanlage versehentlich mit falschen Parametersätzen betrieben wird. Der Befehlsgeber und der Datenspeicher können hingegen beim Gutachter angeordnet sein. Die Steuereinheit empfängt Befehle vom Befehlsgeber, welchen der Parametersätze sie aus dem Parameterspeicher auswählen soll. Durch die Trennung von Steuereinheit und Parameterspeicher wird ein guter Kompromiss zwischen Betriebssicherheit und Manipulationssicherheit erreicht.

Die Erfindung wird nachfolgend unter Bezugnahme auf die beigefügte Zeichnung beispielhaft beschrieben. Es zeigen:

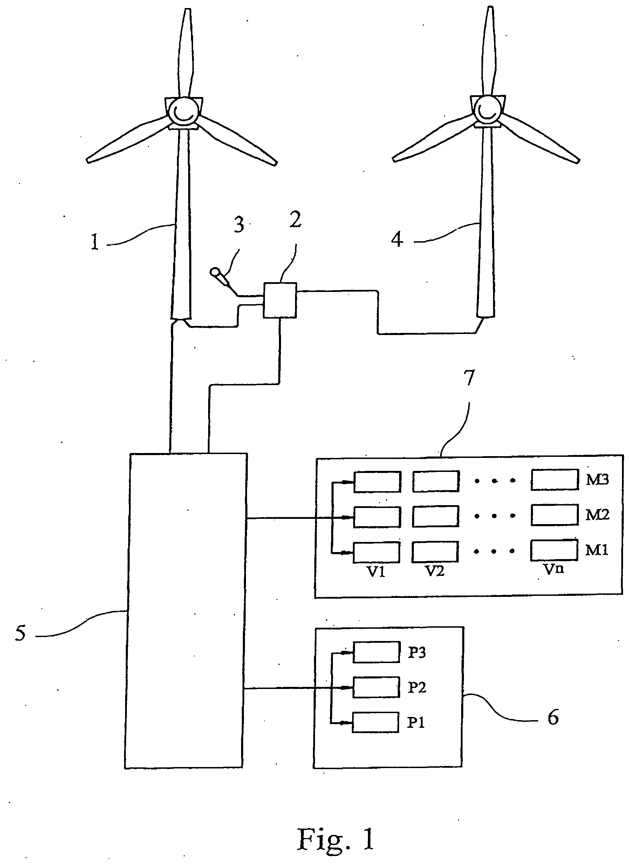

- Fig. 1: eine schematische Darstellung der erfindungsgemäßen Anordnung;
- Fig. 2: ein Ablaufdiagramm des erfindungsgemäßen Verfahrens;
- Fig. 3: eine schematische Darstellung einer für gutachterliche Messungen geeigneten erfindungsgemäßen Anordnung; und
- Fig. 4: ein Ablaufdiagramm der Anordnung nach Fig. 3.

Eine zu vermessende Windenergieanlage 1 ist verbunden mit einer Messeinrichtung 2. Die Windenergieanlage 1 umfasst nicht dargestellte Detektoren für verschiedene zu messenden Größen. Die Detektoren werden von der Messeinrichtung 2 gesteuert, von den Detektoren aufgenommene Messwerte werden an die Messeinrichtung 2 weitergeleitet.

Die Messeinrichtung 2 ist weiterhin mit einem Mikrofon 3 verbunden, das als Detektor für die Geräuschabgabe der Windenergieanlage 1 dient. Eine weitere Verbindung besteht zwischen der Messeinrichtung 2 und einer benachbarten Windenergieanlage 4. Von der benachbarten Windenergieanlage 4 werden Daten über die Windverhältnisse an die Messeinrichtung 2 übermittelt.

Außer der benachbarten Windenergieanlage 4 ist die Messeinrichtung 2 mit weiteren benachbarten Windenergieanlagen verbunden. In der Messeinrichtung 2 ist eine Auswahleinheit enthalten, die unter den benachbarten Windenergieanlagen diejenige auswählt, die in Windrichtung seitlich zur Windenergieanlage 1 angeordnet ist.

Das Zusammenspiel der gesamten Anordnung wird durch ein Steuermodul 5 koordiniert. Das Steuermodul 5 ist verbunden mit der Windenergieanlage 1 und der Messeinrichtung 2. Weiterhin bestehen Verbindungen zu einem Parameterspeicher 6 und einem Datenspeicher 7.

In dem dargestellten einfachen Ausführungsbeispiel sind im Parameterspeicher 6 drei Parametersätze P1, P2, P3 gespeichert. Der Datenspeicher 7 enthält den Parametersätzen P1, P2, P2 zugeordnete Messsätze M1, M2, M3. Jeder der Messsätze M1, M2, M3 umfasst eine Mehrzahl von Messvektoren V1, V2 ... Vn.

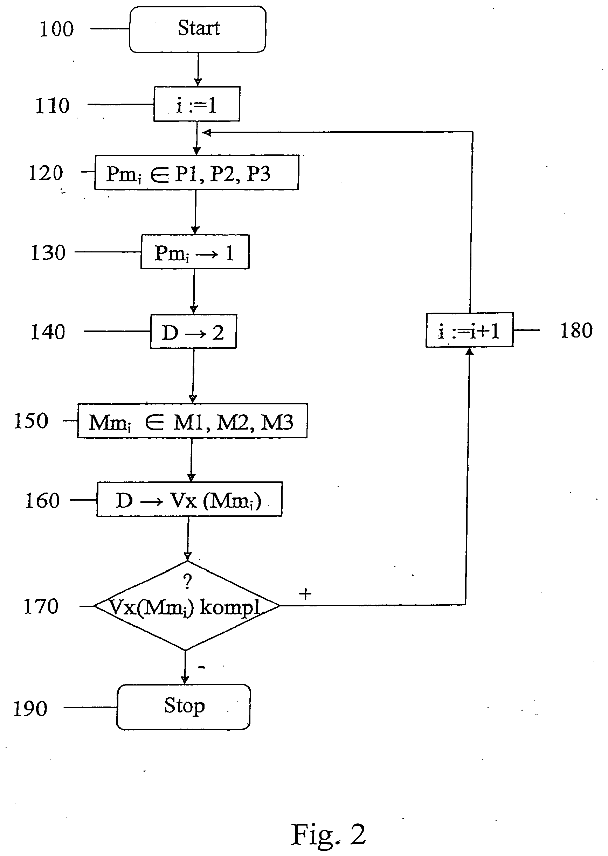

Gemäß Fig. 2 startet das Messverfahren zu einem beliebigen Startzeitpunkt 100. In Schritt 110 wird die laufende Nummer des Messdurchlaufs i auf den Wert 1 gesetzt. Das eigentliche Messverfahren beginnt in 120, indem das Steuermodul 5 einen Parametersatz Pm₁ aus den Parametersätzen P1, P2, P3 des Parameterspeichers 6 auswählt. In Schritt 130 übermittelt das Steuermodul 5 den ausgewählten Parametersatz Pm₁ an die Windenergieanlage 1 und stellt die Windenergieanlage 1 auf einen dem Parametersatz Pm₁ entsprechenden Betriebszustand ein. Nachdem die instationären Übergangseffekte der Windenergieanlage 1 abgeklungen sind, startet die Messeinrichtung 2 in Schritt 140 ein Messintervall, in dem Messdaten D von den Detektoren aufgenommen werden.

Anschließend aktiviert das Steuermodul 5 in Schritt 150 im Datenspeicher 7 den dem Parametersatz Pm₁ zugeordneten Messsatz Mm₁. Der Messsatz Mm₁ wird also aus den Messsätzen M1, M2, M3 als Speicherort für die nächsten zu speichernden Daten ausgewählt. Das Steuermodul 5 ruft in Schritt 160 die Messdaten D von der Messeinrichtung 2 ab und leitet sie an den Datenspeicher 7 weiter. Im Datenspeicher 7 werden die Daten in einem im aktivierten Messsatz Mm₁ enthaltenen Messvektor Vx gespeichert, wobei x einen der Werte 1 bis n annehmen kann. Je nach Art und Umfang der aufgenommenen Messdaten D können die Messdaten anstatt in Messvektoren auch in Messmatrizen V1, V2 ... Vn gespeichert werden.

Bei der Abfrage 170 stellt das Steuermodul fest, dass noch nicht für alle Messvektoren V1...Vn aller Messsätze M1, M2, M3 Messdaten D aufgenommen wurden. Nachdem die laufende Nummer des Messdurchlaufs in 180 auf i=2 gesetzt wurde, startet mit Schritt 120 der zweite Messdurchlauf mit der Auswahl eines Parametersatzes Pn₂.

Das Verfahren endet in 190, wenn in i=3*n Messdurchläufen für alle Messvektoren V1...Vn aller Messsätze M1, M2, M3 Messdaten D aufgenommen wurden. Während der i=3*n Messdurchläufe werden alle Parametersätze Pmᵢ aus P1, P2, P3 und damit alle Messsätze Mmᵢ aus M1, M2, M3 in einer Reihe von Zyklen mehrfach ausgewählt.

Durch die quasi-parallele Vermessung der verschiedenen Parameter- und Messsätze wird gegenüber einer sequentiellen Vermessung eine erhebliche Zeitersparnis erreicht. Indem mehrere verschiedene Parametersätze in kurzer Abfolge hintereinander vermessen werden, wird eine verbesserte Vergleichbarkeit der Messungen erreicht, weil die Windverhältnisse in der kurzen Zeitspanne im wesentlichen konstant bleiben.

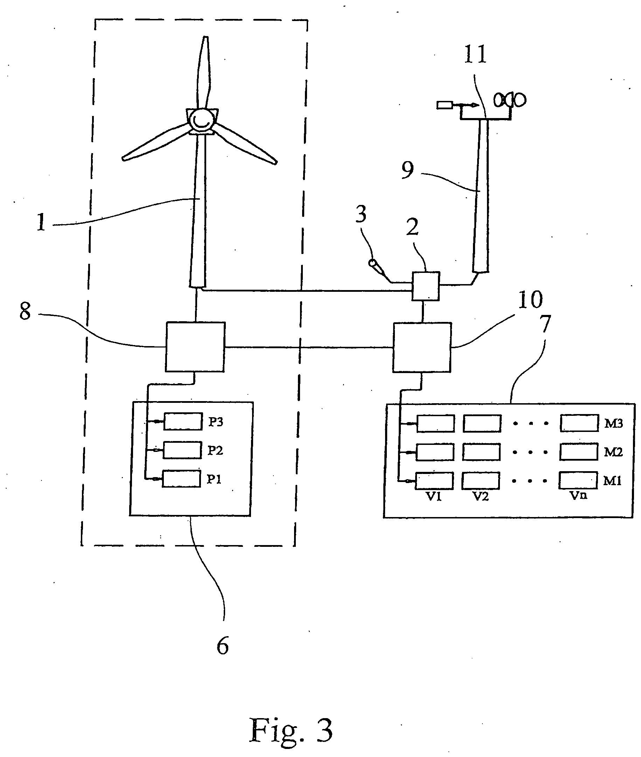

Für gutachterliche Messungen sind gemäß Fig. 3 nur eine Steuereinheit 8 und der Parameterspeicher 6 Bestandteil der Windenergieanlage 1. Ein Befehlsgeber 10 und der Datenspeicher 7 sind getrennt von der Windenergieanlage beim Gutachter angeordnet. Der Befehlsgeber 10 steht in Verbindung mit der Messeinrichtung 2, mit der Steuereinheit 8 und mit dem Datenspeicher 7.

Da die Daten über die Windverhältnisse ebenfalls in ungestörter Strömung erfasst und manipulationssicher sein müssen, ist es bei gutachterlichen Messungen nicht zulässig, die Windmessungen auf einer benachbarten Windenergieanlage vorzunehmen. Vielmehr wird in Hauptwindrichtung vor der Windenergieanlage ein Messmast 9 errichtet, auf dessen Spitze Windsensoren 11 angeordnet sind. Für die Datenübermittlung ist der Messmast 9 über eine Leitung mit der Messeinrichtung 2 verbunden.

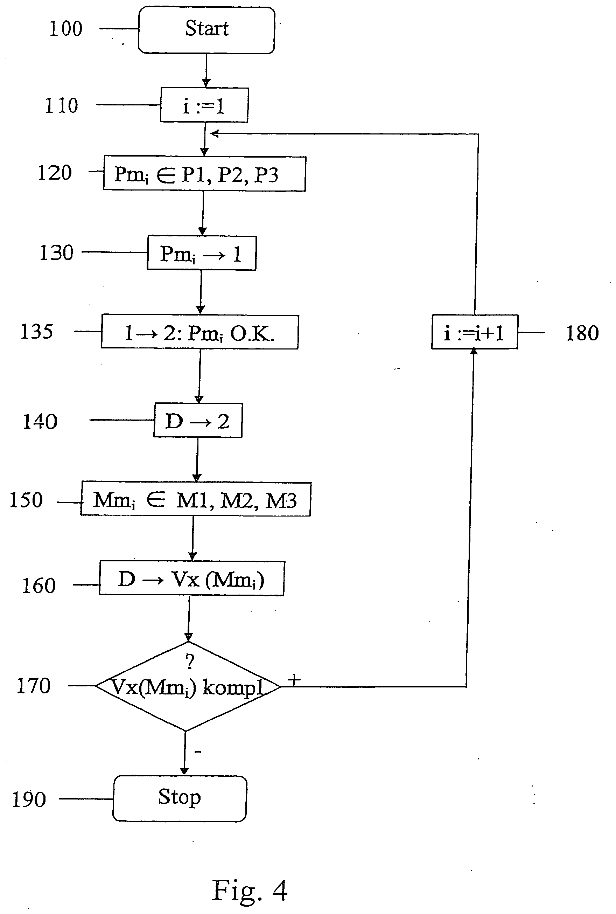

Gemäß Fig. 4 unterscheidet sich der Ablauf einer Messung leicht von dem in Figur 2 dargestellten Verfahren. In Schritt 120 wählt die Steuereinheit 8 den Parametersatz Pmᵢ gemäß der Vorgabe des Befehlsgebers 10 aus. Da es kein einzelnes Steuermodul gibt, bei dem alle Informationen zusammenlaufen, benötigt die Messeinrichtung 2 in Schritt 135 eine Statusmeldung, dass die Windenergieanlage entsprechend dem Parametersatz Pmᵢ eingestellt ist, bevor in Schritt 140 mit der Messung begonnen wird. Die Aufnahme der Messwerte in Schritt 140, die Auswahl des Messsatzes Mmᵢ in Schritt 150 und die Speicherung der Daten im Messvektor Vx in Schritt 160 erfolgt wiederum unter der Kontrolle des Befehlsgebers 10.

## Patentansprüche

1. Verfahren zum Vermessen einer Windenergieanlage (1), bei dem zugeordnete Messsätze (M1, M2, M3) für eine Mehrzahl von Parametersätzen (P1, P2, P3) der Windenergieanlage (1) aufgenommen werden, wobei die Messsätze (M1, M2, M3) zeitlich aufeinanderfolgende Messvektoren (V1...Vn) umfassen, **dadurch gekennzeichnet, dass** in Zyklen zwischen den Parametersätzen (P1, P2, P3) gewechselt wird und dass für jeden Parametersatz (P1, P2, P3) in mehr als einem Zyklus Messvektoren (V1...Vn) aufgenommen werden, wobei die Messvektoren jeweils in einem einzelnen Messintervall aufgenommene Daten enthalten und wobei der Parametersatz (P1, P2, P3) konstant bleibt, während die Daten für einen Messvektor (V1...Vn) aufgenommen werden, und dass nach einem Wechsel des Parametersatzes (P1, P2, P3) vor der Aufnahme des nächsten Messvektors (V1...Vn) in einer Übergangsphase das Abklingen instationärer Übergangseffekte abgewartet wird.

2. Verfahren nach Anspruch 1, **dadurch gekennzeichnet, dass** mehr als zwei Parametersätze (P1, P2, P3) vermessen werden.

3. Verfahren nach Anspruch 1 oder 2, **dadurch gekennzeichnet, dass** für jeden Messvektor (V1...Vn) zwischen 1 Minute und 15 Minuten, vorzugsweise zwischen 8 Minuten und 12 Minuten Daten aufgenommen werden.

4. Verfahren nach einem der Ansprüche 1 bis 3, **dadurch gekennzeichnet, dass** die Übergangsphase eine vorbestimmte Länge hat.

5. Verfahren nach Anspruch 4, **dadurch gekennzeichnet, dass** die Länge der Übergangsphase abhängig von der zu messenden Größe ist.

6. Verfahren nach einem der Ansprüche 1 bis 3, **dadurch gekennzeichnet, dass** die Länge der Übergangsphase dynamisch bestimmt wird.

7. Verfahren nach einem der Ansprüche 1 bis 6, **dadurch gekennzeichnet, dass** nach der Aufnahme eines jeden Messvektors (V1...Vn) der Parametersatz (P1, P2, P3) gewechselt wird.

8. Verfahren nach einem der Ansprüche 1 bis 6, **dadurch gekennzeichnet, dass** der Parametersatz (P1, P2, P3) nach der Aufnahme einer Mehrzahl von Messvektoren (V1...Vn) gewechselt wird.

9. Verfahren nach einem der Ansprüche 1 bis 8, **dadurch gekennzeichnet, dass** für die Messvektoren (V1...Vn) Daten über die Leistungsabgabe, die Netzverträglichkeit, die Geräuschabgabe und/oder das Schwingungsverhalten der Windenergieanlage (1) aufgenommen werden.

10. Verfahren nach einem der Ansprüche 1 bis 10, **dadurch gekennzeichnet, dass** für die Messvektoren (V1...Vn) Daten über die Windverhältnisse aufgenommen werden.

11. Verfahren nach Anspruch 10, **dadurch gekennzeichnet, dass** die Daten über die Windverhältnisse auf einer benachbarten Windenergieanlage (4) aufgenommen werden.

12. Verfahren nach einem der Ansprüche 1 bis 11, **dadurch gekennzeichnet, dass** die Messsätze (M1, M2, M3) aus einer Mehrzahl von Messvektoren gebildete Messmatrizen (V1...Vn) umfassen.

13. Verfahren nach einem der Ansprüche 1 bis 12, **dadurch gekennzeichnet, dass** die Messvektoren (V1...Vn) in der Reihenfolge einer zuvor festgelegten Priorität aufgenommen werden.

14. Verfahren nach einem der Ansprüche 1 bis 13, **dadurch gekennzeichnet, dass** das Wechseln zwischen den Parametersätzen (P1, P2, P3) mittels eines von der Windenergieanlage (1) getrennten Befehlsgebers (10) gesteuert wird.

15. Verfahren nach einem der Ansprüche 1 bis 14, **dadurch gekennzeichnet, dass** die Abfolge der Parametersätze (P1, P2, P3) sich von Zyklus zu Zyklus ändert.

16. Anordnung zum Vermessen einer Windenergieanlage (1) mit einer Messeinrichtung (2) zum Aufnehmen von zeitlich aufeinanderfolgenden Messvektoren (V1...Vn), mit einem Parameterspeicher (6) zum Speichern von Parametersätzen (P1, P2, P3), mindestens einem Steuermodul (5) zum Einstellen der Windenergieanlage gemäß den Parametersätzen (P1, P2, P3), sowie einem Datenspeicher (7), der dazu ausgelegt ist, die Messvektoren (V1...Vn) in den Parametersätzen (P1, P2, P3) zugeordneten Messsätzen (M1, M2, M3) zu speichern, **dadurch gekennzeichnet, dass** das Steuermodul (5) weiterhin dazu ausgelegt ist, in Zyklen einen Parametersatz (Pmi) aus den Parametersätzen (P1, P2, P3) auszuwählen und nach jeder Auswahl den dem ausgewählten Parametersatz (Pmi) zugeordneten Messsatz (Mmi)im Datenspeicher (7) zu aktivieren, wobei die Messvektoren jeweils in einem einzelnen Messintervall aufgenommene Daten enthalten, wobei der Parametersatz (P1, P2, P3) konstant bleibt, während die Daten für einen Messvektor (V1...Vn) aufgenommen werden, und wobei nach einem Wechsel des Parametersatzes (P1, P2, P3) vor der Aufnahme des nächsten Messvektors (V1...Vn) in einer Übergangsphase das Abklingen instationärer Übergangseffekte abgewartet wird.

17. Anordnung nach Anspruch 16, **dadurch gekennzeichnet, dass** der Parameterspeicher (6) und der Datenspeicher (7) in einem Speichermodul (6,7) angeordnet sind.

18. Anordnung nach Anspruch 16 oder 17, **dadurch gekennzeichnet, dass** das Steuermodul (5) in die Windenergieanlage (1) integriert ist.

19. Anordnung nach Anspruch 16, **dadurch gekennzeichnet, dass** das Steuermodul eine Steuereinheit (8) und einen Befehlsgeber (10) umfasst und dass die Steuereinheit (8) die Parametersätze (Pmi) gemäß vom Befehlsgeber (10) empfangenen Befehlen auwählt.

20. Anordnung nach Anspruch 19, **dadurch gekennzeichnet, dass** der Befehlsgeber (10) und der Datenspeicher (7) von der Windenergieanlage (1) getrennt angeordnet sind.

21. Anordnung nach einem der Ansprüche 16 bis 20, **dadurch gekennzeichnet, dass** ihr ein Windmesser einer benachbarten Windenergieanlage (4) zugeordnet ist

22. Anordnung nach Anspruch 21, **dadurch gekennzeichnet, dass** eine Auswahleinheit (2) vorgesehen ist, die dazu ausgebildet ist, eine in Windrichtung seitlich benachbarte Windenergieanlage (4) zuzuordnen.

23. Anordnung nach einem der Ansprüche 16 bis 22, **dadurch gekennzeichnet, dass** sie einen Detektor für das Schwingungsverhalten und/oder einen Detektor (3) die Geräuschabgabe der Windenergieanlage (1) umfasst.

## Claims

1. Method for measurement of a wind energy installation (1), in which associated measurement sets (M1, M2, M3) for a plurality of parameter sets (P1, P2, P3) of the wind energy installation (1) are recorded, wherein the measurement sets (M1, M2, M3) comprise successive measurement vectors (V1...Vn) in time, **characterized in that** cyclic changes are made between the parameter sets (P1, P2, P3), and **in that** measurement vectors (V1...Vn) are recorded for each parameter set (P1, P2, P3) in more than one cycle, wherein the measurement vectors each contain data recorded in an individual measurement interval and wherein the parameter set (P1, P2, P3) remains constant, while the data for a measurement vector (V1...Vn) are recorded, and **in that** the method waits for non-stationary transient effects to decay in a transitional phase after a change in the parameter set (P1, P2, P3) and before the next measurement vector (V1...Vn) is recorded.

2. Method according to Claim 1, **characterized in that** more than two parameter sets (P1, P2, P3) are measured.

3. Method according to Claim 1 or 2, **characterized in that** data is recorded for each measurement vector (V1...Vn) for between 1 minute and 15 minutes, preferably for between 8 minutes and 12 minutes.

4. Method according to one of Claims 1 to 3, **characterized in that** the transitional phase has a predetermined length.

5. Method according to Claim 4, **characterized in that** the length of the transitional phase is dependent on the variable to be measured.

6. Method according to one of Claims 1 to 3, **characterized in that** the length of the transitional phase is determined dynamically.

7. Method according to one of Claims 1 to 6, **characterized in that** the parameter set (P1, P2, P3) is changed after recording each measurement vector (V1...Vn).

8. Method according to one of Claims 1 to 6, **characterized in that** the parameter set (P1, P2, P3) is changed after recording a plurality of measurement vectors (V1...Vn).

9. Method according to one of Claims 1 to 8, **characterized in that** data relating to the power output, the network compatibility, the noise emission and/or the oscillation behaviour of the wind energy installation (1) is recorded for the measurement vectors (V1...Vn).

10. Method according to one of Claims 1 to 10, **characterized in that** data relating to the wind conditions is recorded for the measurement vectors (V1...Vn).

11. Method according to Claim 10, **characterized in that** the data relating to the wind conditions is recorded on an adjacent wind energy installation (4).

12. Method according to one of Claims 1 to 11, **characterized in that** the measurement sets (M1, M2, M3) comprise measurement matrices (V1...Vn) formed from a plurality of measurement vectors.

13. Method according to one of Claims 1 to 12, **characterized in that** the measurement vectors (V1...Vn) are recorded in the sequence of a previously defined priority.

14. Method according to one of Claims 1 to 13, **characterized in that** the change between the parameter sets (P1, P2, P3) is controlled by means of a command transmitter (10) which is separate from the wind energy installation (1).

15. Method according to one of Claims 1 to 14, **characterized in that** the sequence of the parameter sets (P1, P2, P3) changes from one cycle to another.

16. Arrangement for measurement of a wind energy installation (1) having a measurement device (2) for recording successive measurement vectors (V1...Vn) in time, having a parameter memory (6) for storing parameter sets (P1, P2, P3), having at least one control module (5) for adjusting the wind energy installation according to the parameter sets (P1, P2, P3), and having a data memory (7) which is designed to store the measurement vectors (V1...Vn) in measurement sets (M1, M2, M3) which are associated with the parameter sets (P1, P2, P3), **characterized in that** the control module (5) is furthermore designed to select one parameter set (Pmi) from the parameter sets (P1, P2, P3) in cycles and, after each selection, to activate the measurement set (Mmi) associated with the selected parameter set (Pmi) in the data memory (7), wherein the measurement vectors each contain data recorded in an individual measurement interval, wherein the parameter set (P1, P2, P3) remains constant, while the data for a measurement vector (V1...Vn) are recorded, and wherein the method waits for non-stationary transient effects to decay in a transitional phase after a change in the parameter set (P1, P2, P3) and before the next measurement vector (V1...Vn) is recorded.

17. Arrangement according to Claim 16, **characterized in that** the parameter memory (6) and the data memory (7) are arranged in a memory module (6, 7).

18. Arrangement according to Claim 16 or 17, **characterized in that** the control module (5) is integrated in the wind energy installation (1).

19. Arrangement according to Claim 16, **characterized in that** the control module comprises a control unit (8) and a command transmitter (10), and **in that** the control unit (8) selects the parameter sets (Pmi) on the basis of commands received from the command transmitter (10).

20. Arrangement according to Claim 19, **characterized in that** the command transmitter (10) and the data memory (7) are arranged separately from the wind energy installation (1).

21. Arrangement according to one of Claims 16 to 20, **characterized in that** an anemometer of an adjacent wind energy installation (4) is associated with the arrangement.

22. Arrangement according to Claim 21, **characterized in that** a selection unit (2) is provided and is designed to allocate a wind energy installation (4) which is adjacent laterally in the wind direction.

23. Arrangement according to one of Claims 16 to 22, **characterized in that** the arrangement comprises a detector for the oscillation behaviour and/or a detector (3) for the noise emission from the wind energy installation (1).

## Revendications

1. Procédé de mesure d'une éolienne (1), dans lequel des jeux de mesures (M1, M2, M3) sont enregistrés pour une pluralité de jeux de paramètres (P1, P2, P3) de l'éolienne (1), les jeux de mesures (M1, M2, M3) comprenant des vecteurs de mesure (V1 ... Vn) se succédant dans le temps, **caractérisé en ce que** les jeux de paramètres (P1, P2, P3) sont parcourus de manière cyclique et **en ce que**, pour chaque jeu de paramètre (P1, P2, P3), des vecteurs de mesure (V1 ... Vn) sont enregistrés dans plus d'un cycle, les vecteurs de mesure contenant des données enregistrées dans un intervalle de mesure et le jeu de paramètres (P1, P2, P3) restant constant pendant que les données sont enregistrées pour un vecteur de mesure (V1 ... Vn) et **en ce que** après un changement de jeu de paramètres (P1, P2, P3), avant l'enregistrement du vecteur de mesure (V1 ... Vn), dans une phase de transition, l'extinction des effets de transition non stationnaires est attendue.

2. Procédé selon la revendication 1, **caractérisé en ce que** plus de deux jeux de paramètres (P1, P2, P3) sont mesurés.

3. Procédé selon la revendication 1 ou 2, **caractérisé en ce que**, pour chaque vecteur de mesure (V1 ... Vn), des données sont enregistrées pendant 1 minute à 15 minutes, de préférence pendant 8 minutes à 12 minutes.

4. Procédé selon la revendication 1 à 3, **caractérisé en ce que** la phase de transition présente une longueur prédéterminée.

5. Procédé selon la revendication 4, **caractérisé en ce que** la longueur de la phase de transition dépend de la grandeur à mesurer.

6. Procédé selon la revendication 1 à 3, **caractérisé en ce que** la longueur de la phase de transition est déterminée de manière dynamique.

7. Procédé selon l'une des revendications 1 à 6, **caractérisé en ce que**, après l'enregistrement de chaque vecteur de mesure (V1 ... Vn), le jeu de paramètres (P1, P2, P3) est changé.

8. Procédé selon l'une des revendications 1 à 6, **caractérisé en ce que** le jeu de paramètres (P1, P2, P3) est changé après l'enregistrement d'une pluralité de vecteurs de mesure (V1 ... Vn).

9. Procédé selon l'une des revendications 1 à 8, **caractérisé en ce que**, pour les vecteurs de mesure (V1 ... Vn), des données concernant la production de puissance, la compatibilité avec le réseau, les émissions sonores et/ou le comportement vibratoire de l'éolienne (1) sont enregistrées.

10. Procédé selon l'une des revendications 1 à 10, **caractérisé en ce que**, pour les vecteurs de mesure (V1 ... Vn), des données concernant les conditions de vent sont enregistrées.

11. Procédé selon la revendication 10, **caractérisé en ce que** les données concernant les conditions de vent sont enregistrées sur une éolienne (4) voisine.

12. Procédé selon l'une des revendications 1 à 11, **caractérisé en ce que** les jeux de mesures (M1, M2, M3) comprennent des matrices de mesure (V1 ... Vn) constituées d'une pluralité de vecteurs de mesure.

13. Procédé selon l'une des revendications 1 à 12, **caractérisé en ce que** les vecteurs de mesure (V1 ... Vn) sont enregistrés dans un ordre de priorité prédéterminé.

14. Procédé selon l'une des revendications 1 à 13, **caractérisé en ce que** le changement entre les jeux de paramètres (P1, P2, P3) est contrôlé au moyen d'un générateur d'instructions (10) séparé de l'éolienne (1).

15. Procédé selon l'une des revendications 1 à 14, **caractérisé en ce que** la suite de jeux de paramètres (P1, P2, P3) varie d'un cycle à l'autre.

16. Dispositif de mesure d'une éolienne (1) avec un dispositif de mesure (2) pour l'enregistrement de vecteurs de mesure (V1 ... Vn) se succédant dans le temps, avec une mémoire de paramètres (6) pour la mémorisation de jeux de paramètres (P1, P2, P3), au moins un module de commande (5) pour le réglage de l'éolienne en fonction des jeux de paramètres (P1, P2, P3), ainsi qu'une mémoire de données (7) conçue pour mémoriser les vecteurs de mesure (V1 ... Vn) dans les jeux de mesures (M1, M2, M3) correspondant aux jeux de paramètres (P1, P2, P3), **caractérisé en ce que** le module de commande (5) est en outre conçu pour sélectionner, de manière cyclique, un jeu de paramètres (Pmi) parmi les jeux de paramètres (P1, P2, P3) et, après chaque sélection, activer le jeu de mesures (Mmi) correspondant au jeu de paramètres (Pmi) sélectionné dans la mémoire de données (7), les vecteurs de mesure contenant des données enregistrées dans un intervalle de mesure et le jeu de paramètres (P1, P2, P3) restant constant, pendant que les données sont enregistrées pour un vecteur de mesure (V1 ... Vn), et après un changement de jeu de paramètres (P1, P2, P3), avant l'enregistrement du vecteur de mesure (V1 ... Vn), dans une phase de transition, l'extinction des effets de transition non stationnaires étant attendue.

17. Dispositif selon la revendication 16, **caractérisé en ce que** la mémoire de paramètres (6) et la mémoire de données (7) sont disposées dans un module de mémoire (6, 7).

18. Dispositif selon la revendication 16 ou 17, **caractérisé en ce que** le module de commande (5) est intégré dans l'éolienne (1).

19. Dispositif selon la revendication 16, **caractérisé en ce que** le module de commande comprend une unité de commande (8) et un générateur d'instructions (10) et **en ce que** l'unité de commande (8) sélectionne les jeux de paramètres (Pmi) en fonction des instructions provenant du générateur d'instructions (10).

20. Dispositif selon la revendication 19, **caractérisé en ce que** le générateur d'instructions (10) et la mémoire de données (7) sont séparés de l'éolienne (1).

21. Dispositif selon l'une des revendications 16 à 20, **caractérisé en ce qu'**un anémomètre d'une éolienne voisine (4) lui est attribué.

22. Dispositif selon la revendication 21, **caractérisé en ce qu'**une unité de sélection (2) est prévue, qui est conçue pour attribuer une éolienne (4) voisine latéralement dans la direction du vent.

23. Dispositif selon l'une des revendications 16 à 22, **caractérisé en ce qu'**il comprend un détecteur pour le comportement vibratoire et/ou un détecteur (3) pour les émissions sonores de l'éolienne (1).
